# EUROPÄISCHE PATENTSCHRIFT

(11) **EP 0 725 047 B1**
(45) Veröffentlichungstag und Bekanntmachung des Hinweises auf die Patenterteilung: **05.04.2000**
(21) Anmeldenummer: 96100270.6
(22) Anmeldetag: 10.01.1996
(51) Int. Cl.: C04B 35/628, C04B 35/632

(54) **Schlickerzusammensetzung, insbesondere zum Foliengiessen**
Slip composition, especially for film casting
Composition de barbotine, en particulier pour le coulage de feuilles

(30) Priorität: 31.01.1995 DE 19502889
(43) Veröffentlichungstag der Anmeldung: 07.08.1996
(73) Patentinhaber: ROBERT BOSCH GMBH, 70442 Stuttgart (DE)
(72) Erfinder: Gruenwald, Werner, Dipl.-Phys., D-70839 Gerlingen (DE); Lindemann, Gert, Dipl.-Ing., D-72805 Lichtenstein (DE); Lindner, Friederike, Dr.rer.nat., D-70839 Gerlingen (DE); Eisele, Ulrich, Dr.-Ing., D-70199 Stuttgart (DE); Hellekes, Barbara, D-70499 Stuttgart (DE)
(74) Vertreter: Röser, Peter, Dipl.-Ing.

(56) Entgegenhaltungen:
- EP-A- 0 240 160
- US-A- 5 132 072
- DATABASE WPI Week 9411 Derwent Publications Ltd., London, GB; AN 94-086233 XP002002721 & JP-A-06 032 604 (NISSAN CHEM. IND., LTD.) , 8.Februar 1994
- DATABASE WPI Week 9503 Derwent Publications Ltd., London, GB; AN 95-019053 XP002002722 & JP-A-06 305 811 (CENTRAL GLASS CO., LTD.) , 1.November 1994

## Beschreibung

Die Erfindung betrifft eine Schlickerzusammensetzung, insbesondere zum Foliengießen von keramischen Rohstoffen, nach dem Oberbegriff des Anspruchs 1.

### Stand der Technik

Es ist bekannt, in Folien gegossene keramische Rohstoffe in vielen technischen Gebieten einzusetzen. So weisen unter anderem elektronische Bauelemente, beispielsweise elektrochemische Meßfühler, zum Ermitteln der Zusammensetzung eines Gasgemisches mehrere übereinander angeordnete Schichten verschiedener keramischer Rohstoffe auf. Beim Foliengießen wird ein keramischer Schlicker, der in einem Lösungsmittel dispergierte pulverförmige Keramikteile (Pulver) und organische Hilfsmittel (Organik) enthält, zwischen einer Schneide und einem Trägerband zu einer dünnen keramischen Folie ausgezogen. Diese erhaltene Folie wird getrocknet, so daß man eine sogenannte Grünfolie erhält. Diese Grünfolie wird beispielsweise durch Siebdrucken, Laminieren usw. zu keramischen Mehrschichtbauteilen, wie beispielsweise die elektrochemischen Meßfühler, weiterverarbeitet. Am Ende der Weiterverarbeitung werden die Grünfolien gesintert.

Die Organik wird lediglich hilfsweise in den Schlikker eingebracht und übernimmt unter anderem eine Bindefunktion für die Keramikteile. Die Organik wird bei der Sinterung der Grünfolie ausgebrannt.

Bei der Verarbeitung der Schlicker kommt es somit einerseits zu einem Trockenprozeß und andererseits zu einem Sinterprozeß. Bei dem Trockenprozeß wird dem Schlicker das Lösungsmittel, zum Beispiel Wasser, entzogen, so daß die Grünfolie entsteht. Während des Trockenprozesses schwindet die Folie um einen Betrag, der etwa dem Lösemittelgehalt des Schlickers entspricht. Da die Folie in der Regel in x-y-Richtung wegen ihrer Haftung auf einem Träger nicht schwinden kann, erfolgt durch Umordnung der Pulverteilchen in dem Schlicker eine anisotrope Schwindung in z-Richtung. Während des Trockenprozesses treten in der Folie innere Spannungen auf, die um so größer sind, je größer die sogenannte Trockenschwindung ist. Die Trockenschwindung wird wesentlich durch den Feststoffgehalt, also den Anteil des Pulvers in dem Schlicker, bestimmt. Je geringer der Feststoffgehalt ist, um so größer ist die Trockenschwindung, die somit ein langsames Trocknen erfordert, damit die durch die Trockenschwindung entstehenden inneren Spannungen nicht zu einer Zerstörung der Folie führen.

Es werden Schlickerzusammensetzungen für Grünfolien angestrebt, deren pulverförmige Keramikteile eine möglichst kleine mittlere Teichengröße aufweisen. Gleichzeitig wird ein möglichst großer Feststoffgehalt der Grünfolie angestrebt.

Durch die Keramikteile mit möglichst geringer Teilchengröße kann eine Sintertemperatur bei der Weiterverarbeitung der Grünfolie gesenkt werden. Es ist jedoch bekannt, daß die Keramikteile an ihrer Oberfläche in der Regel Hydroxylgruppen tragen, so daß diese zu Agglomerationen neigen und somit schwierig dispergierbar sind. Dem kann zwar durch Zusatz von kationischen oder anionischen Dispergiermitteln entgegengewirkt werden, was jedoch wiederum aufgrund der langreichweitigen elektrostatischen Kräfte zwischen den Keramikteilen zu einem niederen Feststoffgehalt in der Grünfolie führt.

Eine derartige Schlickerzusammensetzung ist beispielsweise aus J. Am. Ceram. Soc. 75 (9) 2373-2378 (1992) (Nahass et al) bekannt. Bei einer Schlickerzusammensetzung mit Aluminiumoxid Al₂O₃, das in einer Korngröße von 0,4 µm mit einer spezifischen Oberfläche von 8,8 m²/g eingesetzt wird, ergeben sich Volumenanteile des Pulvers von ca. 26 %, der Organik von ca. 27 % % und des Lösemittels von ca. 47 %, während die Gewichtsanteile ca. 58 % für das Pulver, ca. 16 % % für die Organik und ca. 26 % % für das Lösungsmittel betragen. Der Organikgehalt des Schlickers, bezogen auf den Feststoff, beträgt 27 %.

Insgesamt weist diese Schlickerzusammensetzung einen relativ hohen Organikanteil, bezogen auf den Feststoffanteil, auf. Gleichzeitig ist die Teilchengröße mit 0,4 µm relativ groß, so daß sich eine relativ kleine spezifische Oberfläche ergibt. Bezogen auf die spezifische Oberfläche ist der Organikanteil in der Grünfolie relativ groß, so daß ein relativ großer Organikanteil beim Sintern ausgebrannt werden muß. Der große Organikanteil in der Grünfolie führt zu einer geringeren Feststoffdichte in der Grünfolie, so daß diese nur bei relativ hohen Sintertemperaturen von ca. 1600 °C gesintert werden können, die zu einem hohen Energieverbrauch und zu Schädigungen im Bauteil/Bauelement führen können.

Bei der Wahl der Schlickerzusammensetzung ist also der Anteil der Organik in bezug auf den Feststoffgehalt und die spezifische Oberfläche der Feststoffe von besonderer Bedeutung.

Eine weitere Schlickerzusammensetzung ist aus EP-A-0 240 160 bekannt, in der in einem Lösungsmittel mit Hilfe eines Dispergiermittels dispergierte, pulverförmige Keramikteilchen mit einem Feststoffgehalt von 20 % bis 98 % offenbart sind. Durch das verwendete Dispergiermittel kann eine Hydrophobierung der Keramikteilchen erzielt werden, sofern diese Oberflächenhydrophobierung der keramischen Schlickerbestandteile nicht bereits vor der Einarbeitung in den Schlicker bestanden hat. Die offenbarte Schlickerzusammensetzung eignet sich besonders für nichtwäßrige keramische Prozesse. Die verwendeten pulverförmigen Keramikteilchen weisen eine mittlere Teilchengröße von weniger als 10 Mikrometern auf, die sich als untere Grenze bis in den Submikrometerbereich erstrecken kann.

Die mittlere Teilchengröße der verwendeten Keramikteile liegt jedoch stets deutlich oberhalb von 300 Nanometern. Als geeignete Lösungsmittel werden im wesentlichen organische Materialien genannt, wobei sich im Fall von Aluminiumoxidteilchen mit einer Teilchengröße im Bereich unterhalb von ca. 10 µm jedoch auch Wasser eignet.

### Vorteile der Erfindung

Die erfindungsgemäße Schlickerzusammensetzung mit den im Anspruch 1 genannten Merkmalen bietet demgegenüber den Vorteil, daß keramische Folien erzielbar sind, die eine hohe Feststoffdichte aufweisen und bei niedrigen Sintertemperaturen verarbeitbar sind. Dadurch, daß die Kermikteile eine Oberflächenhydrophobierung aufweisen, erfahren diese eine sterische Stabilisierung, die zu einem verminderten Platzbedarf für die Keramikteile führt. Infolgedessen lassen sich Keramikteile mit sehr kleiner mittlerer Teilchengröße dispergieren, so daß Grünfolien mit einem relativ hohen Feststoffgehalt erzielbar sind. Die sterische Stabilisierung führt zu einem geringen Teilchenabstand, der im wesentlichen durch die Raumerfüllung der Oberflächenhydrophobierung bestimmt wird. Die gute Dispergierung der Keramikteile mit einer kleinen mittleren Teilchengröße, die im Bereich zwischen 0,02 und 0,3 µm liegt, führt wiederum zu relativ großen spezifischen Oberflächen des Keramik-Pulvers, bezogen auf eine Volumeneinheit oder Gewichtseinheit der Schlickerzusammensetzung. Weiterhin ist vorteilhaft, daß aufgrund der guten Dispergierbarkeit der Keramikteile der Organikanteil in der Schlickerzusammensetzung verringert werden kann.

Aufgrund des vorgesehenen geringen Organikanteils, bezogen auf eine spezifische Oberfläche des Pulvers, das heißt für relativ große spezifische Oberflächen ist ein im Verhältnis geringer Organikanteil notwendig, können die erfindungsgemäßen Schlickerzusammensetzungen besser verarbeitet werden. Hierbei ist einerseits die Gründichte in der getrockneten Folie höher, so daß eine Trockenschwindung während des Trocknens nicht zu großen inneren Spannungen führen kann. Beispielsweise ist die Trockentemperatur erhöhbar und damit die Trokkenzeit verringerbar. Durch die höhere Gründichte wird andererseits gewährleistet, da der Anteil der Organik entsprechend geringer ausfällt, und die mittlere Teilchegröße der Keramikteile relativ klein ist, daß die Grünfolien bei einer geringeren Sintertemperatur weiterverarbeitet werden können. Insgesamt ergeben sich somit wesentliche technologische Vorteile bei der Verarbeitung von keramischen Folien mit der erfindungsgemäßen Schlickerzusammensetzung.

Weitere vorteilhafte Ausgestaltungen ergeben sich aus den übrigen in den Unteransprüchen genannten Merkmalen.

Die Erfindung wird nachfolgend in Ausführungsbeispielen näher erläutert.

### Beschreibung der Ausführungsbeispiele

Nach einem ersten Ausführungsbeispiel soll eine Keramikfolie auf Basis von Aluminiumoxid Al₂O₃ hergestellt werden. Das Aluminiumoxid wird mit einer Korngröße von 0,2 bis 0,3 µm sukzessive in eine vorgelegte Mischung aus Wasser, Tensid, Co-Tensid und Weichmacher eingebracht. Als Weichmacher wird hierbei beispielsweise Polyethylenglycol verwendet. Das pulverförmige Aluminiumoxid besitzt hierbei eine spezifische Oberfläche von ca. 13 m²/g. Die Oberfläche der Alumiumoxidkörner wurde vorher hydrophobiert. Als Tensid kann beispielsweise ein nichtionisches Tensid und als Co-Tensid Octanol eingesetzt werden. Das Co-Tensid wirkt hierbei gleichzeitig als Schaumverhütungsmittel für den Versatz. Diesem Ansatz wird nach dem Einbringen des Aluminiumoxids ein emulgierter Binder, beispielsweise Acrylpolymer, zugegeben.

Das Tensid, das Co-Tensid, der Weichmacher und der Binder bilden den Organikanteil am Schlicker. Durch die Beigabe des emulgierten Binders wird eine Viskosität eingestellt, die beispielsweise zwischen 300 und 700 mPa · s beträgt. Insgesamt beträgt der Feststoffgehalt des Schlickers 35 bis 40 Vol./%. Vom Tensid und Co-Tensid werden insgesamt vier Masseprozent, bezogen auf das eingesetzte Aluminiumoxid, zugesetzt. Der Weichmacher wird mit einem Anteil von 7 bis 11 Masseprozent und der emulgierte Binder mit einem Anteil von 3,5 bis 5,5 Masseprozent, ebenfalls bezogen auf das Aluminiumoxid, beigegeben. Der gesamte Versatz wird nunmehr beispielsweise in einer Walzenmühle für eine Zeitspanne von 1 bis 3 Stunden homogenisiert. Im Anschluß an die Homogenisierung erfolgt eine Entlüftung, und der Schlicker kann in bekannter Weise zu einer Folie vergossen werden. Die so erzielte Folie wird anschließend getrocknet und entsprechend ihrem gewählten Einsatzbereich gesintert. Eine Foliendicke der vergossenen Folie beträgt hierbei beispielsweise 0,2 bis 2 mm.

Die nachfolgende Tabelle verdeutlicht zwei erfindungsgemäße Schlickerzusammensetzungen:

| Name | Dichte g/cm ³ | Einwage g | Gew. % | Vol. % |
|---|---|---|---|---|
| Al₂O₃ (Pulver) | 3,987 | 60,6 | 67,4 | 34,1 |
| Organik | 1 | 13 | 14,5 | 29,2 |
| H₂O | 1 | 16,4 | 18,2 | 36,7 |
| Al₂O₃ (Pulver) | 3,987 | 78,9 | 71,6 | 38,7 |
| Organik | 1 | 14,3 | 13,0 | 28,0 |
| H₂O | 1 | 17 | 15,4 | 33,3 |

Bei der ersten genannten Beispielzusammensetzung des Schlickers ergibt sich insgesamt ein Volumenanteil des Pulvers von ca. 34 %, von der Organik von ca. 29 % und von dem Wasser als Lösungsmittel von ca. 37 %. Die Gewichtsanteile bei der Schlickerzusammensetzung betragen von dem Pulver ca. 68 %, der Organik ca. 14 % und dem Wasser ca. 18 %. Der Organikgehalt des Schlickers bezogen auf den Feststoffgehalt beträgt 21,45 %.

Bei dem zweiten konkreten Beispiel betragen die Volumenanteile des Schlickers demgegenüber beim Pulver ca. 39 %, bei der Organik ca. 28 % und bei dem Wasser ca. 33 %, während die Gewichtsanteile beim Pulver ca. 72 %, bei der Organik 13 % und beim Wasser ca. 15 % betragen. Hier beträgt der Organikgehalt des Schlikkers bezogen auf den Feststoffgehalt 18,12 %.

Nach einem zweiten Ausführungsbeispiel soll eine Schlickerzusammensetzung für eine keramische Folie auf Basis von hydrophobiertem Zirkonoxid ZrO₂ erzielt werden. Das Zirkonoxid wird in Pulverform mit einer Teilchengröße von ca. 0,02 µm und einer spezifischen Oberfläche von 50 m²/g verarbeitet. Die in Pulverform vorliegende Keramik wird in einen Ansatz aus Wasser als Lösemittel, Weichmacher und einem Tensid-Co-Tensid-Gemisch eingebracht. Das Tensid-Co-Tensid-Gemisch ist hierbei nur mit einem Drittel seiner späteren Gesamtmenge vorerst in dem Ansatz enthalten. Das Zirkonoxid wird nunmehr unter Rühren und gleichzeitiger Beigabe der restlichen zwei Drittel des Tensid-Co-Tensid-Gemisches in den Ansatz eingegeben. Anschließend erfolgt eine Beigabe des emulgierten Binders. Als Tensid kann wiederum ein nichtionisches Tensid, als Co-Tensid Octanol und als Weichmacher Polyethylenglykol verwendet werden. Der entstandene Ansatz wird durch Rühren und gegebenenfalls einer leichten Ultraschallbehandlung homogenisiert.

Nach einem konkreten Beispiel kann die Zusammensetzung des Schlickers wie folgt erfolgen:

| Name | Dichte g/cm³ | Einwaage g | Gew. % | Vol. % |
|---|---|---|---|---|
| Zirkonoxid ZrO₂ (Pulver) | 5,82 | 18,6 | 67,8 | 26,6 |
| Organik | 1 | 3,8 | 13,9 | 31,7 |
| H₂O | 1 | 5 | 18,3 | 41,7 |

Bei einer derartigen Schlickerzusammensetzung ergeben sich für den Schlicker die Volumenanteile von ca. 27 % für das Zirkonoxid, ca. 32 % für die Organik und ca. 41 % für das Wasser, während die Gewichtsanteile bei ca. 68 % für das Pulver, ca. 14 % für die Organik und ca. 18 % für das Wasser liegen. Insgesamt besitzt dieser Schlicker einen Organikgehalt von 20,43 %, bezogen auf den Feststoffgehalt des Keramikpulvers, wobei dieses gleichzeitig eine hohe spezifische Oberfläche von 50 m²/g besitzt.

Bei allen genannten Beispielen ist ein geringer Organikanteil gegenüber dem Feststoffanteil gegeben, der um die 20 % % liegt. Dieser geringe Organikanteil führt in Verbindung mit dem gegenüber dem Stand der Technik feinkörnigeren Pulver - wie bereits erläutert - zu einer höheren Feststoffdichte in einer getrockneten Folie, das heißt also in einer Grünfolie, von ca. 50 % % und damit zu einer niedrigen Sintertemperatur bei der Weiterverarbeitung von ca. 1340 °C für Al₂O₃. Gleichzeitig ist aufgrund der geringeren notwendigen Sintertemperaturen eine Energieeinsparung unter Vermeidung von Nebeneinflüssen auf die Bauelemente durch hohe Sintertemperaturen möglich.

## Patentansprüche

1. Schlickerzusammensetzung, insbesondere zum Foliengießen von keramischen Rohstoffen, mit in einem Lösungsmittel dispergierten pulverförmigen Keramikteilen und organischen Hilfsstoffen, die zu einem Schlicker verarbeitet werden, wobei die Keramikteile bereits vor der Einarbeitung in den Schlicker eine Oberflächenhydrophobierung aufweisen, und wobei die mittlere Teilchengröße des Pulvers zwischen 20 Nanometern und 300 Nanometern liegt und das Lösungsmittel Wasser ist.

2. Schlickerzusammensetzung nach Anspruch 1, **dadurch gekennzeichnet**, daß die spezifische Oberfläche des Pulvers größer als 10 m² pro Gramm ist.

3. Schlickerzusammensetzung nach einem der vorhergehenden Anprüche, **dadurch gekennzeichnet**, daß der Organikanteil, bezogen auf den Pulveranteil im Schlicker kleiner als 25 %, vorzugsweise ca. 20 % ist.

4. Schlickerzusammensetzung nach einem der vorhergehenden Ansprüche, **dadurch gekennzeichnet**, daß die Organik einen emulgierten Binder enthält.

5. Schlickerzusammensetzung nach einem der vorhergehenden Ansprüche, **gekennzeichnet durch** eine Viskosität zwischen 50 und 1000 mPa · sec.

6. Schlickerzusammensetzung nach einem der vorhergehenden Ansprüche, **dadurch gekennzeichnet**, daß als Pulver Aluminimoxid(Al₂O₃)-Pulver verwendet wird.

7. Schlickerzusammensetzung nach einem der vorhergehenden Ansprüche, **dadurch gekennzeichnet**, daß als Pulver Zirkonoxid(ZrO₂)-Pulver verwendet wird.

8. Verwendung einer Schlickerzusammensetzung nach einem der Ansprüche 1 bis 7 zur Herstellung einer Grünfolie mit einem Feststoffgehalt größer als 55 %, vorzugsweise größer als 60 %.

9. Verwendung einer Schlickerzusammensetzung nach einem der Ansprüche 1 bis 8 zur Herstellung einer Grünfolie aus α-Al₂O₃, die bei Temperaturen von 1300° bis 1350° C sinterbar ist.

## Claims

1. Slip composition, particularly for the tape casting of ceramic raw materials, comprising pulverulent ceramic components dispersed in a solvent and organic auxiliaries which are processed to form a slip, wherein the ceramic components have been hydrophobicized on their surface before incorporation into the slip and the mean particle size of the powder is from 20 nanometers to 300 nanometers and the solvent is water.

2. Slip composition according to Claim 1, characterized in that the specific surface area of the powder is greater than 10 m² per gram.

3. Slip composition according to any of the preceding claims, characterized in that the proportion of organics is less than 25%, preferably about 20%, based on the proportion of powder in the slip.

4. Slip composition according to any of the preceding claims, characterized in that the organics contain an emulsified binder.

5. Slip composition according to any of the preceding claims, characterized by a viscosity of from 50 to 1000 mPa·sec.

6. Slip composition according to any of the preceding claims, characterized in that the powder used is aluminium oxide (Al₂O₃) powder.

7. Slip composition according to any of the preceding claims, characterized in that the powder used is zirconium oxide (ZrO₂) powder.

8. Use of a slip composition according to any of Claims 1 to 7 for producing a green sheet having a solids content of greater than 55%, preferably greater than 60%.

9. Use of a slip composition according to any of Claims 1 to 8 for producing a green sheet of α-Al₂O₃ which is sinterable at temperatures of from 1300°C to 1350°C.

## Revendications

1. Composition de barbotine, notamment pour couler des feuilles de matière première céramique, comprenant des parties de matière céramique pulvérulentes dispersées dans un solvant et des agents auxiliaires organiques traités pour former un barbotine, les parties de matière céramique ayant, avant leur introduction dans la barbotine, une caractéristique de surface superficielle hydrophobe et la taille moyenne des particules de la poudre est comprise entre 20 µm et 300 µm et le solvant est de l'eau.

2. Composition de barbotine selon la revendication 1,
caractérisée en ce que
la surface superficielle spécifique de poudre est supérieure à 10 m²/g.

3. Composition de barbotine selon l'une quelconque des revendications précédentes,
caractérisée en ce que
la teneur en matière organique par rapport à la teneur en poudre de la barbotine est inférieure à 25 % et de préférence de l'ordre de 20 %.

4. Composition de barbotine selon l'une quelconque des revendications précédentes,
caractérisée en ce que
les matières organiques contiennent un liant émulsifiant.

5. Composition de barbotine selon l'une quelconque des revendications précédentes,
caractérisée par
une viscosité comprise entre 50 et 1000 mPa/sec.

6. Composition de barbotine selon l'une quelconque des revendications précédentes,
caractérisée en ce que
la poudre est une poudre d'alumine Al₂O₃.

7. Composition de barbotine selon l'une quelconque des revendications précédentes,
caractérisée en ce que
la poudre est une poudre d'oxyde de zirconium (ZrO₂).

8. Application d'une composition de barbotine selon l'une quelconque des revendications 1 à 7 pour la fabrication d'une feuille non cuite ayant une teneur en matière solide supérieure à 55 %, de préférence supérieure à 60 %.

9. Application d'une composition de barbotine selon l'une quelconque des revendications 1 à 7 pour la fabrication d'une feuille non cuite d'alumine α-Al₂O₃ qui se fritte à des températures comprises entre 1300°C et 1350°C.
